(19) 

Europäisches
Patentamt
European
Patent Office
Office européen
des brevets

(11) **EP 3 477 334 A1**

(12) **EUROPEAN PATENT APPLICATION**

(43) Date of publication:
**01.05.2019 Bulletin 2019/18**

(21) Application number: **17197920.6**

(22) Date of filing: **24.10.2017**

(51) Int Cl.:
**G01S 13/93** (2006.01)　　**G01S 7/40** (2006.01)
**G01S 13/42** (2006.01)　　**G01S 13/44** (2006.01)
**G01S 13/87** (2006.01)　　**G01S 13/74** (2006.01)
**G01S 13/02** (2006.01)　　**G01S 3/02** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Veoneer Sweden AB
447 83 Vårgårda (SE)**

(72) Inventors:
- **Schmied, Julian
97421 Schweinfurt (DE)**
- **Eisenmann, Stefan
97762 Hammelburg (DE)**

(74) Representative: **Sandstedt, Jonas Sven James
WESTPATENT AB
Almekärrsvägen 11
443 39 Lerum (SE)**

(54) **AUTOMATIC RADAR SENSOR CALIBRATION**

(57)　　The present disclosure relates to a method performed by a sensor signal processing unit (100) for calibrating output signals (115) from radar sensors (110). The method comprises selecting a calibration object (130) located in a field of view of the radar sensors; generating expected sensor output signals (141) corresponding to detection of the calibration object, based on a model of the calibration object (140); receiving sensor output signals (115) from the radar sensors associated with detection of the calibration object; and updating a calibration parameter (120) of the radar sensors based on a comparison (165) between the expected sensor output signals (141) and the received sensor output signals (151), wherein the updated calibration parameters comprise calibration information for calibrating a value of the radar sensor output signals.

FIG. 1

**Description**

DESCRIPTION OF THE DISCLOSURE

The present disclosure relates to methods and devices for calibrating a radar sensor system, such as a radar sensor system for use in vehicular applications.

Today, vehicle environment sensor systems, such as camera systems, radio detection and ranging (radar) systems and light detection and ranging (lidar) systems, can be mounted on a vehicle, often referred to as an ego vehicle, to detect and to track objects in a vicinity of the vehicle. The input from these sensor systems can be used to automate vehicle systems such as speed control and collision prevention. Auto alignment, ego motion estimation, scene understanding, lane keeping assist (LKA) and automated driving (AD) are also enabled by using the sensor system output signals.

Radar systems are sensor systems arranged to produce output comprising a series of reflection points as measured by radar receiver sensors. Reflection points can be treated as separate detections or grouped if they relate to the same object. Reflection points or groups of reflection points observed over time can be used to track the motion of an object over time. Such a determination over time is referred to as the track of an object.

Radar sensors used to estimate bearings are affected by various vehicle components such as different types of bumpers and vehicle front and rear section geometries. Sensors are also affected by variations during manufacturing and assembly. Sensor systems therefore require calibration to produce accurate sensor output signals. This calibration is often performed in factory, which is time-consuming and drives cost. Optimal calibration parameters may also change over time, which necessitates a re-calibration, which may not be convenient.

US 6,778,928 B2 discloses a method for calibrating a camera-based sensor system. This method uses stationary objects in the path of a vehicle to calibrate sensor systems comprising a camera-based sensor device.

There is a need for enhanced methods to calibrate radar sensor systems, such as stand-alone radar-based sensor systems.

It is an object of the present disclosure to provide improved methods and devices for sensor calibration.

This object is achieved by a method performed by a sensor signal processing unit for calibrating output signals from radar sensors. The method comprises selecting a calibration object located in a field of view of the radar sensors, and generating expected sensor output signals corresponding to detection of the calibration object based on a model of the calibration object. The method also comprises receiving sensor output signals from the radar sensors associated with detection of the calibration object, and updating a calibration parameter of the radar sensors based on a comparison between the expected sensor output signals and the received sensor output signals, wherein the updated calibration parameters comprise calibration information for calibrating a value of the radar sensor output signals.

This way, a raw sensor output signal is automatically calibrated before it has been used to determine other more high-level quantities, such as bearing or location. Furthermore, said calibration requires no permanent calibration equipment or in-factory calibration, and can be run continuously during normal operation of the sensor system.

Advantageously, sensor systems do not require extensive calibration performed in factory, which saves time and reduces overall cost. Re-calibration is conveniently performed during normal operation of the sensor system, which voids inconvenient sensor re-calibration.

US 6,778,928 B2 uses a camera-based sensor system in conjunction with a radar-based sensor system to jointly estimate model parameters and calibrate certain high-level parameters of the total system. It is unclear exactly how the calibration is performed in 6,778,928 B2 as the disclosure appears incomplete.

The approach of US 6,778,928 B2 is different from the above method in many respects. For instance, 6,778,928 B2 calibrates on a higher level, i.e., bearing, using more than one type of sensor system, and not directly on a value of the radar sensor output signals. 6,778,928 B2 calibrates by jointly optimizing model parameters and calibration parameters by minimizing an error signal, as opposed to generating expected sensor output signals corresponding to detection of the calibration object, based on a model of the calibration object. 6,778,928 B2 does not mention updating a calibration parameter of radar sensors based on a comparison between expected sensor output signals and the received sensor output signals.

According to aspects, the calibrated value of the radar sensor output signals comprises any of a phase value, an amplitude value, a complex signal value, or a polar coordinate signal value.

According to aspects, the method comprises initializing the calibration parameter of the radar sensors based on a type of a vehicle component arranged in a vicinity of the radar sensors. Thus, a known vehicle component configuration can be used to reduce calibration convergence time and to increase calibration accuracy.

According to aspects, the method comprises estimating a level of stationarity of the selected calibration object, or estimating a probability that the selected calibration object corresponds to a stationary object. Thereby, robustness of the proposed method is increased, since objects that appear stationary may suddenly move, whereupon the method adjusts by determining that the object is more unlikely to correspond to a stationary object, thereby avoiding error in the calibration of the sensor system.

According to aspects, the method also comprises selecting a non-stationary object as the calibration object. Thereby the method can be applied in a wider variety of scenarios, even if no stationary object exists to use in the calibration procedure. This is made possible by the feature of the method only requiring generating expected sensor output signals corresponding to detection of the calibration object, based on a model of the calibration object. Said model may correspond to a stationary object, or to a non-stationary object such as a moving vehicle.

According to aspects, the method comprises selecting an active radar signal source as the calibration object. The active radar signal source generates a strong received signal which is especially advantageous to use in the calibration routine.

There is also disclosed herein a sensor signal processing unit arranged to calibrate output signals from radar sensors. The sensor signal processing unit comprises a control unit arranged to select a calibration object located in a field of view of the radar sensors, and to generate expected sensor output signals corresponding to detection of the calibration object, based on a model of the calibration object. The control unit is also arranged to receive sensor output signals from the radar sensors associated with detection of the calibration object, and to update a calibration parameter of the radar sensors based on a comparison between the expected sensor output signals and the received sensor output signals. The updated calibration parameters comprise calibration information for calibrating a value of the radar sensor output signals.

There is furthermore disclosed herein a vehicle comprising a sensor signal processing unit according to the above discussion

BRIEF DESCRIPTION OF THE DRAWINGS

The present disclosure will now be described more in detail with reference to the appended drawings, where:

Figure 1       is a block diagram illustrating a sensor signal processing system;

Figure 2A      is a block diagram schematically illustrating a radar-based sensor system;

Figure 2B      schematically illustrates a vehicle with on-board radar sensors having calibration issues;

Figure 3       is a flowchart illustrating methods according to the present disclosure;

Figure 4       is a flowchart illustrating methods according to the present disclosure;

Figure 5       illustrates an example application of a radar-based sensor system mounted on a vehicle.

Figure 6       shows graphs illustrating results of operations in a sensor signal processing system;

Figure 7       illustrates radar-based sensors and shows graphs illustrating results of operations in a sensor signal processing system; and

Figure 8       schematically illustrates components of a control unit.

DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

Radar-based sensor systems require calibration in order to provide accurate sensor output signals. For instance, a radar sensor system configured to measure bearing from a vehicle to an object will provide biased sensor output signals in case the radar sensor device is not correctly mounted with respect to a boresight angle of the vehicle during vehicle assembly. To correct such errors, radar sensor systems undergo calibration after vehicle assembly to compensate for any discrepancies and imperfections in sensor output signals. This calibration procedure is time consuming and drives cost.

Calibration is the process of generating or determining the value or values of a calibration parameter associated with the radar sensor system. A calibration parameter may comprise any number of entries, which entries are used to adjust the output from sensor systems to provide an increased accuracy. As an example, a calibration parameter may comprise phase difference adjustment values to be applied to measured radar signal phase differences.

Optimal or near-optimal calibration parameter values may change over time due to component aging, changes in sensor mounting, or other external or internal factors. In case such change over time is significant, re-calibration of sensor systems may be necessary. Such re-calibration may be costly or difficult to perform.

US 6,778,928 B2 discloses a method of calibrating a sensor system. The method detects stationary or quasi-stationary objects in a vicinity of the sensor system. Data inferred from sensor signals, i.e., coordinates and/or bearings, are then sent to a calibration unit which compares the 'real world' data to corresponding data generated from a 'model world' comprising the detected stationary or non-stationary objects. This comparison between, e.g., coordinates as exemplified in US 6,778,928 B2, results in an error vector determined as a difference between modelled coordinates and coordinates estimated from sensor signals, i.e., camera imagery. The method attempts to minimize this error vector by some non-disclosed algorithm which adjusts model parameters and calibration parameters jointly.

A potential drawback of the method proposed in US 6,778,928 B2 is that the calibration parameters are applied on a relatively abstract level, i.e., calibration is performed on coordinates and bearings, not on raw sensor output signals.

Another potential drawback of the methods proposed in US 6,778,928 B2 is the restriction to stationary or so-called 'quasi-stationary' objects. There is an explicit teaching to select either stationary or quasi-stationary objects, without any elaboration on what a quasi-stationary object is.

A further potential drawback of the disclosure of US 6,778,928 B2 is the lack of instruction in how to apply the proposed methods in a radar-based sensor system not relying on a camera-based sensor for calibration.

Yet another potential drawback of the disclosure of US 6,778,928 B2 is that the method only proposes a joint optimization of model parameters and calibration parameters. This joint approach necessitates control over the algorithms that supply the model data from the 'model world and drives algorithm complexity. The algorithm proposed in US 6,778,928 B2 does not disclose receiving model information from an exterior algorithm arranged to provide comparison data.

To alleviate these drawbacks, a calibration method is proposed which calibrates raw radar sensor output signals directly, instead of calibrating on a higher level. For instance, a radar-based sensor system arranged to generate sensor output signals 151 comprising a phase and an amplitude will be calibrated directly on raw sensor output signal levels, instead of on a bearing derived from the raw sensor output signal.

It is appreciated that the term raw sensor output signal is to be interpreted broadly and may comprise any of a complex signal, a phase signal, an amplitude signal, and a signal represented by polar coordinates. According to some aspects, a raw sensor output signal is a sensor output signal which has not been post-processed into an estimate of, e.g., range, bearing, or coordinates.

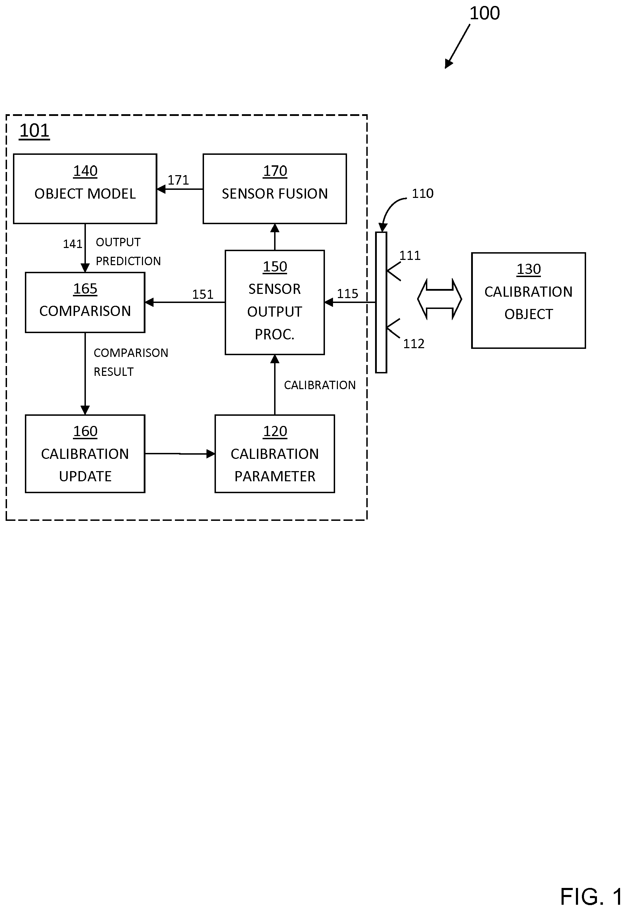

Figure 1 is a block diagram illustrating a sensor signal processing system according to aspects of the present disclosure. A calibration object 130 is present in a field of view (FOV) of a radar-based sensor system 110. The radar-based sensor system here comprises two radar receiving antennas 111, 112. Sensor output signals 115 from the radar sensors are input to a control unit 101 which is arranged to apply pre-processing to the sensor output signals. The sensor output signals are calibrated in a pre-processing unit 150 using calibration data from a calibration parameter unit 120 before being used for other purposes, i.e., to determine bearings to objects.

The received sensor signals, after calibration, may according to some aspects be transmitted to a sensor fusion module 170 which estimates and/or tracks objects in a vicinity of the sensor system. The sensor fusion module maintains an updated description of the surrounding environment, including any objects, such as the calibration object 130.

According to some aspects, the sensor fusion unit 170 provides calibration object data 171, to form a model 140 of the calibration object 130, which model 140 can be used to predict what the received sensor output signals should look like, given the present state of the surrounding environment and the current state of, e.g., a vehicle to which the sensor systems have been mounted. This sensor output prediction 141, or expected sensor output signals 141, are used in a comparison 165 with the preprocessed sensor signals 151 that were received from the sensor system. This way, expected or predicted sensor output signals are compared to what the radar-based sensor system actually measures.

As an alternative, the comparison 165 may be performed on the sensor output prediction signal 141 and the sensor output signals 115 prior to pre-processing 150. Thus, according to some aspects a comparison 165 is made between expected sensor output signals 14) and received sensor output signals 115, and according to other aspects a comparison 165 is made between expected sensor output signals 14) and calibrated received sensor output signals 151.

In case the model 140 of the calibration object 130 corresponds exactly with the calibration object 130 in the real world, and the sensor system is perfectly calibrated, then the comparison will result in a very small difference. However, errors in both object model 140 and sensor calibration will result in a difference between expected sensor output signals and received sensor output signals.

The comparison result, i.e., the difference between expected and received sensor output, is used to update the calibration parameter in a calibration update routine 160. This calibration update routine, according to some aspects, is arranged to select a calibration vector which minimizes the comparison result, i.e., which minimizes the difference between expected and received sensor output signal. This difference between expected and received sensor output signal will herein sometimes be referred to as an error signal.

Several different algorithms are known which can be used to minimize this error signal, or difference signal, over a parameter or a parameter vector, for instance based on the orthogonality principle. The minimization of the error signal can be performed by means of least-mean-squares minimization, by Kalman filtering, by particle filtering, and the like. The minimization of the error signal can also be performed by means of a search over a range of calibration parameter values.

An especially advantageous method for minimizing the error signal is, according to some aspects, the so-called total least squares method, were a signal model parameter is adjusted jointly with an input parameter. The total least squares method, or similar methods, can be used to jointly minimize the error signal by adjusting certain key parameters of the object model in parallel with adjusting the calibration parameter of the sensor system.

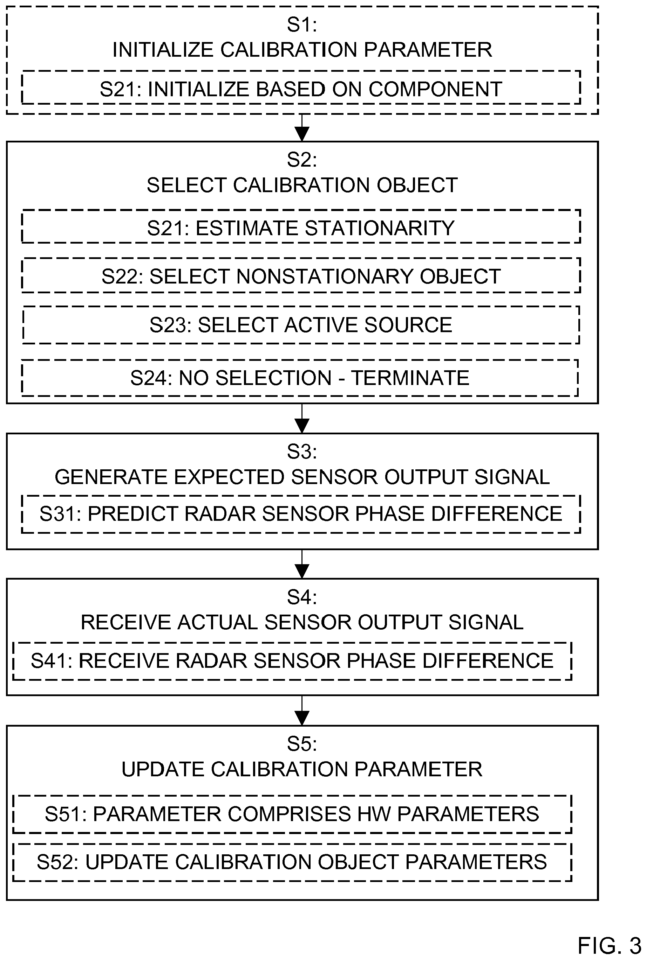

The calibration object may be stationary or non-stationary. The calibration object may also be an active signal source, such as a radar signal repeater or relay device, or a radar signal transmitter. Such aspects will be discussed below in connection to Figure 3.

The radar-based sensor system 110 may according to some aspects use a transmission scheme in which a sum and a difference signal are transmitted. The sum signal uses two transmitters in phase to generate a strong signal in the bore-sight direction. The difference signal uses two transmitters with a relative output phase difference of 180 degrees to generate a transmission zero in the bore-sight direction, but with increased side-lobe transmission power. In this case a separate calibration may be performed for each transmission scheme.

This separate calibration is particularly advantageous in scenarios where radar signal reflections are received from a large angle compared to bore-sight and with low energy. The difference signal transmission mode will perform better in such scenarios, while the sum signal transmission mode will perform better in other scenarios, e.g., when radar signal reflections are received from a smaller angle compared to bore-sight.

Consequently, figure 1 illustrates a sensor signal processing unit 100 arranged to calibrate output signals 115 from radar sensors 110. The sensor signal processing unit 100 comprises a control unit 101 arranged to select a calibration object 130 located in a field of view of the radar sensors, and to generate expected sensor output signals 141 corresponding to detection of the calibration object 130, based on a model 140 of the calibration object 130. The control unit 101 is also arranged to receive sensor output signals 115 from the radar sensors 110 associated with detection of the calibration object 130, and to update a calibration parameter 120 of the radar sensors 110 based on a comparison 165 between the expected sensor output signals 141 and the received sensor output signals 151. The updated calibration parameters comprise calibration information for calibrating a value of the radar sensor output signals.

According to some aspects, the calibrated value of the radar sensor output signals 115 comprises any of a phase value, an amplitude value, a complex signal value, or a polar coordinate signal value.

It is appreciated that calibration of a phase value comprises comparing expected sensor output phase signals 141 corresponding to detection of the calibration object 130 to sensor output phase signals 151 from the radar sensors 110 associated with detection of the calibration object 130.

For instance, a model of the calibration object may comprise angle information, such as a bearing, from a radar sensor to the object. An expected phase of received sensor output signal can then be estimated from a doppler distribution over bearing This expected phase can be compared to the actual received phase. The comparison result can then be used to update the calibration parameter.

It is also appreciated that calibration of an amplitude value comprises comparing expected sensor output amplitude signals 141 corresponding to detection of the calibration object 130 to sensor output amplitude signals 151 from the radar sensors 110 associated with detection of the calibration object 130.

For instance, a model of signal attenuation can be used in conjunction with a model of range between a radar sensor and the object as well as a measure of transmitted signal power in order to estimate an expected amplitude of received radar sensor signals. This expected amplitude can be compared to an actual received amplitude value. The comparison result can then be used to update the calibration parameter.

According to another example, signal attenuation of different receiver branches in a radar-based sensor system may be calibrated to reduce antenna imbalance effects. After applied calibration parameters the same signal received on different receive antenna branches should have the same absolute value (magnitude) of its complex raw signal. Thus, magnitudes of signal levels are compared and a difference between expected and actual levels are used to calibrate, e.g., a variable gain element in order to reach calibrated amplitude levels of two or more receive branches.

It is furthermore appreciated that calibration of a complex signal value, or a polar coordinate signal value, comprises comparing expected complex or polar sensor output signals 141 corresponding to detection of the calibration object 130 to complex or polar sensor output signals 151 from the radar sensors 110 associated with detection of the calibration object 130.

According to the same principles as discussed above, a model 140 of the calibration object 130 can be used to generate expected complex or polar sensor output signals, which expected signals can be compared to actual received complex or polar signals. The comparison result can then be used to update the calibration parameter.

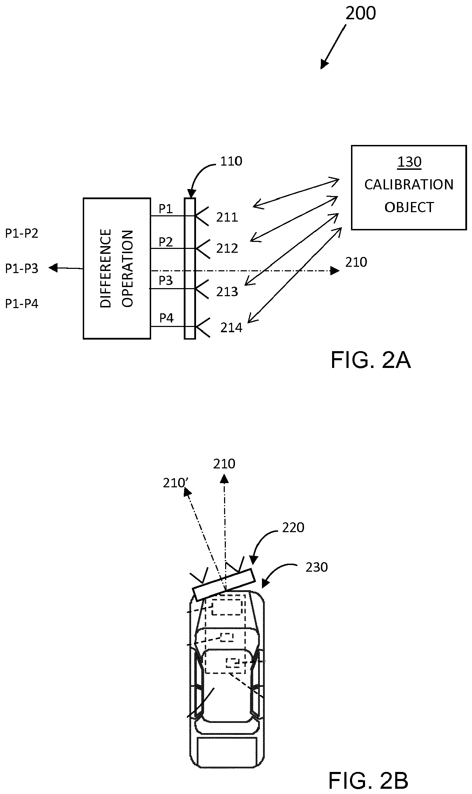

Figure 2A is a block diagram schematically illustrating a radar-based sensor system 200. The radar-based sensor system 200 generates sensor output signals formatted as phase differences. Each radar receive antenna 211, 212, 213, 214 receives a radar signal having a certain phase, P1, P2, P3, P4. Modern radar systems often operate at very high carrier frequencies, e.g., on the order of tens of gigahertz, which means that received phase fluctuates rapidly. However, phase differences vary more slowly, and basically carry the same information as the phases of individual radar signals. N-1 phase difference sensor output signals can be obtained from N sensor phase signals, P1-P2, P1-P3, P1-P4. Here phase P1 is used as reference phase, but any phase of P1, P2, P3 or P4 can be used as reference phase. The phase difference sensor output signals can be used to determine a bearing to an object, such as a calibration object 130. The bearing is often determined with reference to a bore-sight direction 210.

In case the radar receivers are mounted in error, the perceived bore-sight direction may not correspond exactly to the true bore-sight direction. This error can be alleviated by calibration of the phase difference signals.

A vehicle component shape, such as a bumper or front section shape, will influence the phase, amplitude, complex value or polar value of radar signals received at the radar receive antennas, e.g., from variations in attenuation over the different antennas, so called "back-bouncing of transmitted waves between bumper and host car (behind sensor), standing waves (known as "creeping modes"), bumper color and material variations, shape and variation of radomes, mounting of sensor behind bumper, variations in material, variations in permittivity, and other aspects of vehicle component design.

Figure 2B illustrates a vehicle with a radar-based sensor system 220 mounted on a vehicle bumper 230. The bumper 230 has been assembled at an angle compared to the vehicle bore-sight direction 210 such that an angled or deviating bore-sight direction 210' is obtained. Thus, sensor output signals will be biased and therefore need calibration in order to provide accurate sensor output signals.

Figure 3 is a flowchart illustrating methods according to the present disclosure, performed by a sensor signal processing unit such as the sensor signal processing unit 100 discussed in connection to Figure 1 above.

The flowchart illustrates a method performed by a sensor signal processing unit 100 for calibrating output signals 115 from radar sensors 110. The method comprises selecting S2 a calibration object 130 located in a field of view of the radar sensors 110, and generating S3 expected sensor output signals 141 corresponding to detection of the calibration object 130, based on a model 140 of the calibration object 130. The method also comprises receiving S4 sensor output signals 151 from the radar sensors associated with detection of the calibration object 130, and updating S5 a calibration parameter 120 of the radar sensors based on a comparison 165 between the expected sensor output signals 141 and the received sensor output signals 151, wherein the updated calibration parameters comprise calibration information for calibrating a value of the radar sensor output signals 115.

According to some aspects, the calibrated value of the radar sensor output signals 115 comprises any of a phase value, an amplitude value, a complex signal value, or a polar coordinate signal value.

There are several advantages obtained by the proposed approach. For instance, there is an improved integration of the calibrated signals in the overall system, as the calibration is effective in all methods and routines that make use of the already calibrated sensor output signals. There is also a suppression of non-linearity effects, again due to that the calibration is applied directly on the sensor output signals. Effects from phase shifts in the sensor output signals are adjusted for continuously over time.

As opposed to the method proposed in US 6,778,928 B2, the calibration parameters are here applied on 'raw' sensor output signals, rather than on the relatively abstract level of coordinates and bearings.

A difference between the present disclosure and the disclosure of US 6,778,928 B2 is that US 6,778,928 B2 restricts operation to calibration using stationary or so-called 'quasi-stationary' objects. No such restriction is made in the methods illustrated in Figure 3.

A further difference between the proposed method and the disclosure of US 6,778,928 B2 is that US 6,778,928 B2 teaches a joint optimization of model parameters and calibration parameters. This joint approach necessitates control over the algorithms that supply the model data from the 'model world. The methods illustrated in Fig. 3 may, according to some aspects, operate only on calibration parameters, without access to adjustable model parameters.

According to some aspects, the method comprises initializing S1 the calibration parameter of the radar sensors based on a type of a vehicle component arranged in a vicinity of the radar sensors.

Here, a type of vehicle component may be, for example a certain model of car, having a certain type of bumper design on which sensors are mounted. Different vehicle component arrangements affect radar-based sensors differently, which is why different calibration parameter initializations are preferred for different arrangements of vehicle component type. This type of initialization is advantageous in that it provides an enhanced rate of convergence to optimal or near-optimal calibration parameters, since the initial calibration parameter value is likely closer to the optimal calibration parameter value.

The proposed calibration method can be used to calibrate radar-based sensor systems mounted on a variety of different bumpers and on a variety of different types of vehicles. The resulting calibration data can be stored in a memory. A newly produced vehicle, or a vehicle in need of calibration parameter initialization, can then be initialized to the calibration parameter value corresponding to the vehicle type and vehicle component arrangement. This way, vehicle type specific calibration initialization parameter values may be obtained.

This type of initialization is also advantageous in that it can be used with radar-based sensor systems not comprising the sensor signal processing unit as disclosed herein. For example, some vehicles may comprise on-board radar-based sensor systems but lack a capability of continuous radar sensor calibration. Such vehicles can use a fixed calibration parameter based on the type of vehicle components arranged in a vicinity of the radar sensors.

According to some other aspects, the method comprises estimating S21 a level of stationarity of the selected calibration object, or estimating a probability that the selected calibration object corresponds to a stationary object.

Thus, according to such aspects, the proposed method does not rely on the presence of a stationary or 'quasi-stationary' object in the field of view of sensors. Some objects suitable for calibration may be stationary during certain periods of time, and non-stationary otherwise. For instance, a parked car may be suitable as calibration object, and selected for use based on a stationary model. However, the parked car may start and pull out of the parking lot. In case this happens, the method will estimate the level of stationarity as low, and either update the model used for generating the expected sensor output signals, or select another more suitable calibration object.

In case several possible calibration objects exist in the field of view of a radar-based sensor system, the method will, according to some aspects, select the calibration objects with the highest level of estimated stationarity.

Model details and data from a sensor fusion algorithm corresponding to the calibration objects may be used in the estimation of stationarity, e.g., an estimated object type classification; An object having a pedestrian type classification is more likely to move than, e.g., an object having a parked vehicle type classification. The parked vehicle is again more likely to move than a permanent structure such as a building.

According to further aspects, the method comprises selecting S22 a non-stationary object as the calibration object. Again, the proposed method does not rely on the presence of a stationary or 'quasi-stationary' object in the field of view of sensors. Some objects suitable for calibration may be non-stationary. As long as expected sensor output signals can be generated with sufficient accuracy, an object can be either stationary or non-stationary. A non-stationary object having physical characteristics determined with high accuracy may in some cases even be preferred over a stationary object with more uncertain physical characteristics. For example, the level of accuracy in determined object characteristics may be obtained from an estimate of variance in a sensor fusion algorithm based on, e.g., a Kalman filter or a particle filter implementation.

According to additional aspects, the method comprises selecting S23 an active radar signal source as the calibration object. It is appreciated that not only passive reflective objects can be used as calibration objects. Radar repeater devices and relays may improve the accuracy of the calibration parameter. As an example, consider an active repeater installed in connection to a vehicle assembly line. As the vehicles pass the radar repeater, the sensor signal processing units receive a strong radar signal from the radar repeater. This strong radar signal is less prone to corruption by, e.g., thermal noise. Also, the physical characteristics of the radar repeater, such as its exact location in relation to the assembly line and geometrical shape can be made known to the sensor signal processing unit 100.

According to some aspects, the method comprises terminating S24 a calibration parameter update procedure in case no calibration object is found. There may be periods of time when no suitable calibration object exists in the field of view of the radar-based sensors. In this case the method may terminate or be put on hold until a suitable calibration object is found.

According to further aspects, the method comprises generating S31 an expected phase difference signal corresponding to a difference in received phase between detection of the calibration object by a first radar antenna, and detection of the calibration object by a second radar antenna.

According to some other aspects, the method comprises receiving S41 a phase difference signal corresponding to a difference in received phase between detection of the calibration object by the first radar antenna, and detection of the calibration object by the second radar antenna. The use of radar sensor phase differences was discussed in connection to Figure 2 above.

According to some further aspects, the calibration parameter comprises a hardware-related parameter S51 of the radar sensors, the hardware parameters being associated with any of a frequency offset value, a phase offset value, an amplitude gain adjustment value, a setting of one or more equalizer filter tap values, a power supply value. Thus, advantageously, fundamental hardware parameters of the radar-based sensor may be calibrated by the disclosed methods.

According to some aspects, the calibration parameter comprises a parameter associated with a geometrical property of the selected calibration object S52. Thus, a joint optimization of model parameters associated with the calibration object and calibration parameters associated with the radar-based sensor system is achieved.

According to some aspects, the updating S5 comprises adjusting the calibration parameter to minimize a difference between the expected sensor output signals 141 and the received sensor output signals 151. The minimized difference is, according to aspects, a squared difference (a squared error criterion), an absolute value of a signed difference (an amplitude criterion), or a maximum peak value of a difference signal (a mini-max criterion).

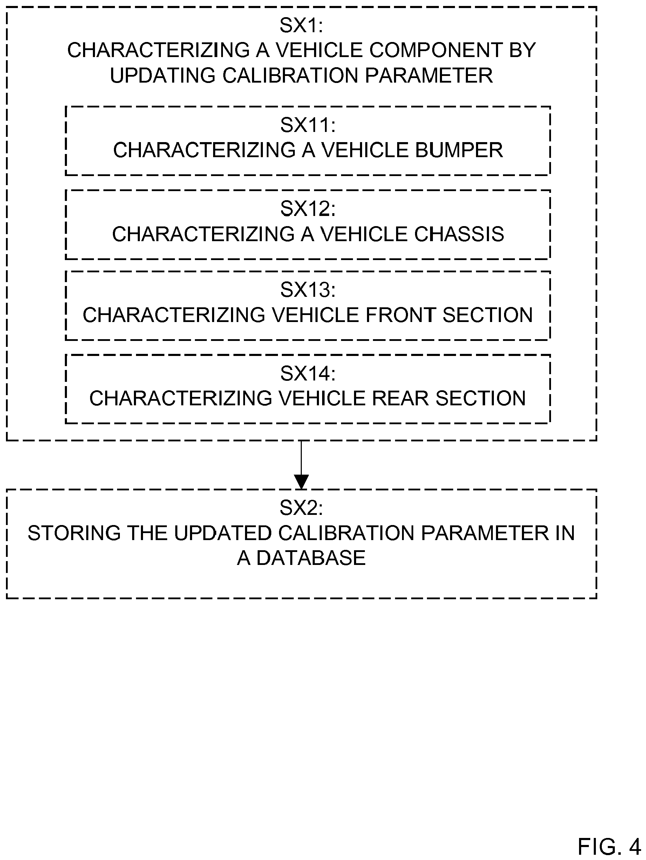

Figure 4 is a flowchart illustrating additional methods according to the present disclosure. Figure 4 highlights aspects of the disclosed method, which methods comprise characterizing SX1 a vehicle component by the updated calibration parameter. This aspect was discussed above in connection to the initialization part of the disclosed method. This type of characterization is advantageous in that it provides calibration parameters for use with various vehicles having different arrangements in terms of bumper geometry, front end geometry, and the like. The proposed calibration method can be used to calibrate radar-based sensor systems mounted on a variety of different bumpers and on a variety of different types of vehicles. The resulting calibration data can be stored in memory. A newly produced vehicle, or a vehicle in need of calibration parameter initialization, can then be initialized to the calibration parameter value corresponding to the vehicle type and vehicle component arrangement. This way, vehicle type specific calibration initialization parameter values may be obtained.

According to some aspects, the method also comprises storing the updated calibration parameter SX2 in a database of car component characterizations. The storing is advantageous in that the stored calibration parameters can be used with radar-based sensor systems not comprising the sensor signal processing unit as disclosed herein. I.e., vehicles which comprise on-board radar-based sensor systems but without capability of continuous radar sensor calibration. Such vehicles can use a fixed calibration parameter based on the type of vehicle components arranged in a vicinity of the radar sensors.

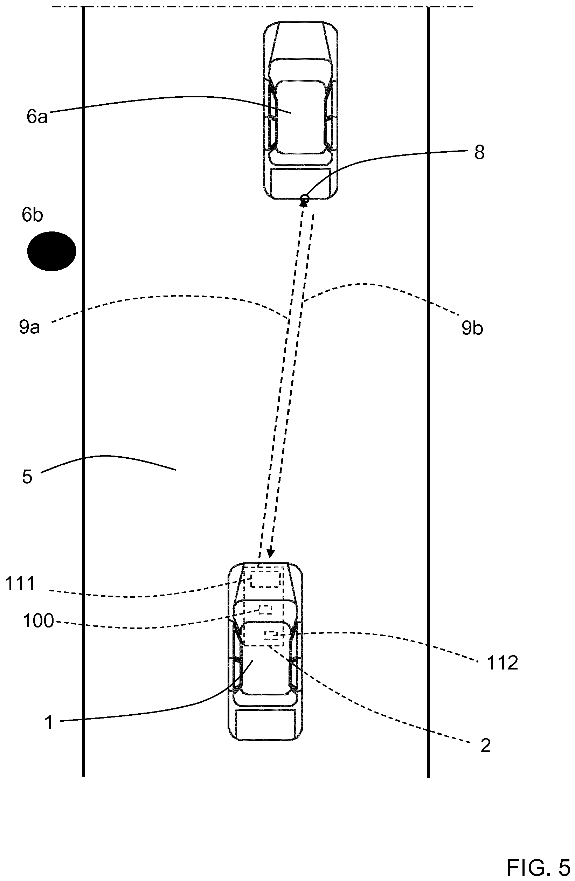

Figure 5 illustrates an example application of a sensor signal processing unit 100 system mounted on a vehicle 1 having a front section 2. The vehicle travels on a roadway 5 and has two objects in its sensors field of view. A non-stationary object 6a, a car, is located down the road 5, and a stationary object 6b is located on the road-side. The radar-based sensor system transmits radar signals 9a and receives reflections 9b from reflective surfaces 8 on the vehicle 6a.

According to the present disclosure, models of both the non-stationary object 6a and the stationary object 6b can be used in the calibration methods as disclosed herein.

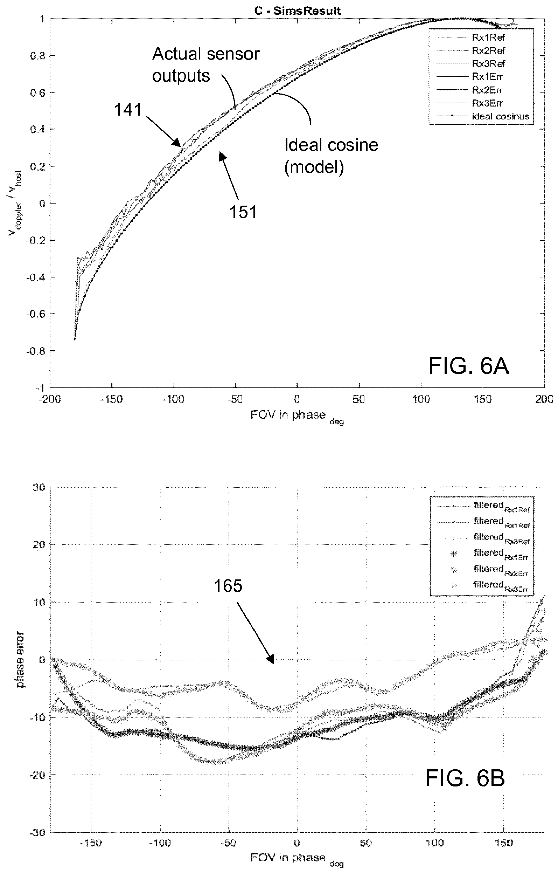

Figure 6 shows graphs illustrating results of operations in a sensor signal processing system. The graphs are the result of an approximately 500 meters long test drive on a typical city-street. Based on that 500m measurement self-calibration was running as disclosed herein.

According to example aspects of the method discussed in connection to Figure 3, a calibration routine may be performed according to the following sequence of operations.

Step 1; For an in-phase mode of operation and an out-of-phase mode of operation, and a radar-based system with four receive antennas, three phase difference signals are generated by determining phase differences between sensor output signals. In-phase mode operation phase difference sensor output signals are denoted Rx1Ref, Rx2Ref, and Rx3Ref, while out-of-phase mode of operation phase difference sensor output signals are denoted Rx1Err, Rx2Err, and Rx3Err.

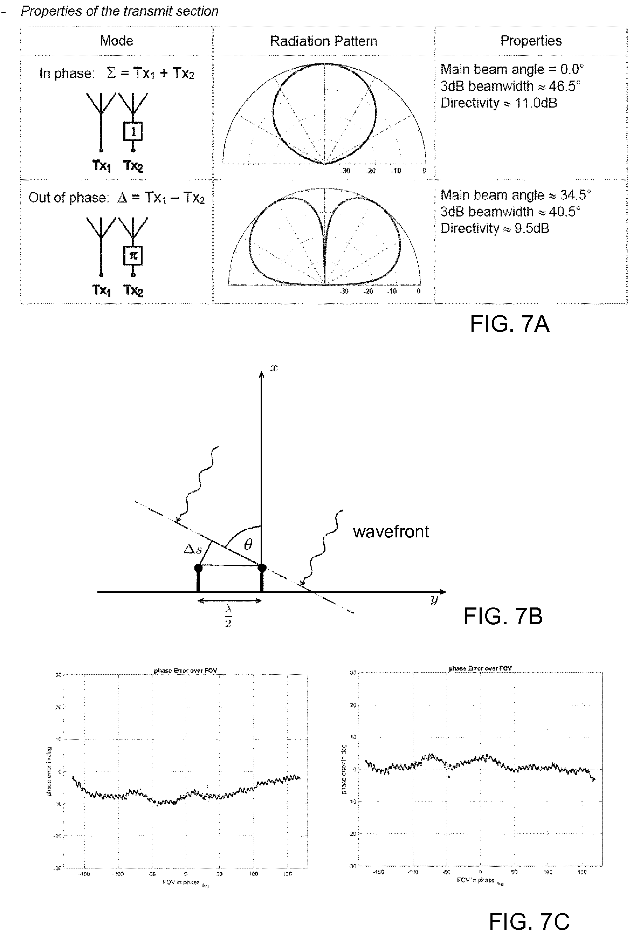

In general, the 2N antennae are implemented by series feed patch arrays that have a 180° phase shifter in-between the two antenna rows. The reference pattern or sum pattern, i.e., the in-phase mode of operation, is obtained by feeding both antenna rows in phase while the error pattern or delta pattern, i.e., the out-of-phase mode of operation, is obtained by supplying the second row with the wave being 180° out of phase compared. The two modes of operation are illustrated in Figure 7A.

When designing the antennae, it is advantageous if sidelobes are suppressed as much as possible. Side lobes have a negative effect on the measurement accuracy of angle or bearing.

Step 2. Based on prior knowledge of the targets (e.g. that they are stationary), doppler information leads to angle or bearing information. In a radar consisting of 4 receive antennas (not equidistant) the measured phase difference is ambiguous. A half-wavelength spaced antenna is illustrated in Figure 7B. This antenna set-up results in a measured phase difference for an angle $\theta=0$ of $\Delta\varphi=180°$. However, this leads to a measured phase difference $\Delta\varphi$ for a $\lambda$ - spaced antenna to in $\Delta\varphi=360°$, which is ambiguous, as it could be also 0°, or "boresight".

So, according to the antenna spacing the measured phase difference ambiguity gets resolved by prior knowledge obtained from, e.g., a sensor fusion unit 170. It is advantageous if the accuracy of prior knowledge information is at least better than the ambiguity of the receive antenna having the largest antenna spacing.

After solving ambiguities using a non-equidistant sparse antenna array, doppler/host velocity ratio is filtered via a filter, e.g., a growing memory filter. The data domain ranges from -180 degrees to 180 degrees in 2-degree steps. The Doppler-ratio (measured Doppler divided by actual host velocity (velocity of host car)) is determined over measured phase differences. Since the host velocity relies on "car-wheel-ticks" it is crucial that the internally known wheel size represents reality. In a case it is off e.g. 10% the curves maximum will not be the value 1 but greater. This sensor output signal is plotted in Figure 6A. In Figure 6A is also plotted the expected sensor output signal based on a model of a stationary calibration object located in a field of view of the radar sensors. A comparison can now be made between the generated expected sensor output signals 141 and the received sensor output signals 151.

Step 3. Host velocity correction is now applied and a phase difference error for each step gets calculated.

The host velocity error correction is evaluated as

$$error = 1 - dopplerRatio_{measured}$$

The phase difference error corresponds to the comparison result 165, and it is plotted in Figure 6B.

Step 4. The calibration parameter is now adjusted such that the determined comparison result, or error signal, is minimized. For instance, a least-mean-squares method can be used to minimize a squared value of the determined error signal. Figure 7C illustrates the result of calibration. To the left is shown a phase error plot before calibration, and to the right a phase error plot after calibration. It is seen that the phase error is significantly decreased due to the execution of the disclosed calibration method.

Figure 6A illustrates radar signal processing according to the above discussion where the expected sensor output signals 141 corresponding to detection of the calibration object 130 is based on a model 140 of the calibration object 130 comprising measured Doppler frequency velocity of a stationary target divided by host velocity, $V_{doppler}/V_{host}$. The model underlying curve 151 in Figure 6A is given by

$$\sin\big(\mathrm{acos}(\mathrm{dopplerRatio})\big) - \mathrm{mounting\ angle}$$

where mounting angle corresponds to an estimate of sensor mounting angle in relation to vehicle bore-sight.

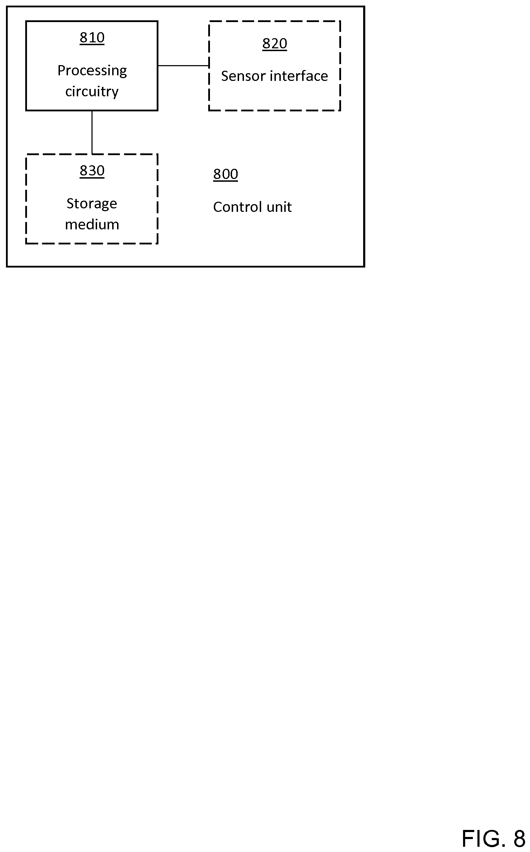

Figure 8 schematically illustrates components of a control unit 800. Some of the various example embodiments described herein, in particular related to the sensor signal processing units and control units, are described in the general context of functional units, method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory, ROM, Random Access Memory, RAM, compact discs, CDs, digital versatile discs, DVDs, etc. Generally, program modules may include routines, programs, objects, components, data structures, etc. that performs particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

According to some aspects, the disclosed sensor signal processing units and control units comprise processing circuitry. The processing circuitry may be any suitable type of computation unit, e.g. a microprocessor, digital signal processor, DSP, field programmable gate array, FPGA, or application specific integrated circuit, ASIC, or any other form of circuitry. It should be appreciated that the processing circuitry need not be provided as a single unit but may be provided as any number of units or circuitry.

Figure 8 schematically illustrates, in terms of a number of functional units, the components of a control unit 800 according to an embodiment. Processing circuitry 810 is provided using any combination of one or more of a suitable central processing unit (CPU), multiprocessor, microcontroller, digital signal processor (DSP), etc., capable of executing software instructions stored in a computer program product, e.g. in the form of a storage medium 830. The processing circuitry 810 may further be provided as at least one application specific integrated circuit (ASIC), or field programmable gate array (FPGA).

Particularly, the processing circuitry 810 is configured to cause the control unit 800 to perform a set of operations, or steps. These operations, or steps, was discussed above in connection to Fig. 3 For example, the storage medium 830 may store the set of operations, and the processing circuitry 810 may be configured to retrieve the set of operations from the storage medium 830 to cause the control node 800 to perform the set of operations. The set of operations may be provided as a set of executable instructions. Thus, the processing circuitry 810 is thereby arranged to execute methods as herein disclosed.

The storage medium 830 may also comprise persistent storage, which, for example, can be any single one or combination of magnetic memory, optical memory, solid state memory or even remotely mounted memory.

The control unit 800 may further comprise a communications interface 820 for communications with at least one sensor device, i.e., a sensor interface 820. As such, the sensor interface 820 may comprise one or more transmitters and receivers, comprising analogue and digital components and a suitable number ports for wireline or wireless communication.

The processing circuitry 810 is adapted to control the general operation of the control node 800 e.g. by sending data and control signals to the sensor interface 820 and the storage medium 830, by receiving data and reports from the sensor interface 820, and by retrieving data and instructions from the storage medium 830. Other components, as well as the related functionality, of the control node 800 are omitted in order not to obscure the concepts presented herein.

**Claims**

1. A method performed by a sensor signal processing unit (100) for calibrating output signals (115) from radar sensors (110), the method comprising;
   selecting (S2) a calibration object (130) located in a field of view of the radar sensors;
   generating (S3) expected sensor output signals (141) corresponding to detection of the calibration object (130), based on a model (140) of the calibration object (130); receiving (S4) sensor output signals (151) from the radar sensors (110) associated with detection of the calibration object (130);
   updating (S5) a calibration parameter (120) of the radar sensors (110) based on a comparison (165) between the expected sensor output signals (141) and the received sensor output signals (151), wherein the updated calibration parameters comprise calibration information for calibrating a value of the radar sensor output signals (115).

2. The method according to claim 1, wherein the calibrated value of the radar sensor output signals (115) comprises any of a phase value, an amplitude value, a complex signal value, or a polar coordinate signal value.

3. The method according to claim 1 or 2, comprising initializing (S1) the calibration parameter of the radar sensors based on a type of a vehicle component arranged in a vicinity of the radar sensors.

4. The method according to any of the previous claims, comprising estimating (S21) a level of stationarity of the selected calibration object, or estimating a probability that the selected calibration object corresponds to a stationary object.

5. The method according to any of the previous claims, comprising selecting (S22) a non-stationary object as the calibration object.

6. The method according to any of the previous claims, comprising selecting (S23) an active radar signal source as the calibration object.

7. The method according to any of the previous claims, comprising terminating (S24) a calibration parameter update procedure in case no calibration object is found.

8. The method according to any of the previous claims, comprising generating (S31) an expected phase difference signal corresponding to a difference in received phase signal between detection of the calibration object by a first radar antenna (211), and detection of the calibration object (130) by a second radar antenna (212, 213, 214).

9. The method according to claim 8, comprising receiving (S41) a phase difference signal corresponding to a difference in received phase between detection of the calibration object by the first radar antenna (211), and detection of the calibration object by the second radar antenna (212, 213, 214).

10. The method according to any of the previous claims, wherein the calibration parameter comprises a hardware related parameter (S51) of the radar sensors (110), the hardware parameters being associated with any of a frequency offset value, a phase offset value, an amplitude gain adjustment value, a setting of one or more equalizer filter tap values, a power supply value.

11. The method according to any of the previous claims, wherein the updating (S5) comprises adjusting the calibration parameter to minimize a difference between the expected sensor output signals (141) and the received sensor output signals (151).

12. The method according to any of the previous claims, comprising characterizing (SX1) a vehicle component by the updated calibration parameter.

13. The method according to claim 12, comprising storing the updated calibration parameter (SX2) in a database of car component characterizations.

**14.** A sensor signal processing unit (100) arranged to calibrate output signals (115) from radar sensors (110), the sensor signal processing unit (100) comprising a control unit (101) arranged to select a calibration object (130) located in a field of view of the radar sensors (110), and to generate expected sensor output signals (141) corresponding to detection of the calibration object (130), based on a model (140) of the calibration object (130), where the control unit (101) also is arranged to receive sensor output signals (151) from the radar sensors (110) associated with detection of the calibration object (130), and to update a calibration parameter (120) of the radar sensors based on a comparison (165) between the expected sensor output signals (141) and the received sensor output signals (151), **characterized in that** the updated calibration parameters comprise calibration information for calibrating a value of the radar sensor output signals (115).

**15.** A vehicle (1) comprising a sensor signal processing unit (100) according to claim 14.

100

101

| 140 OBJECT MODEL | ← 171 — | 170 SENSOR FUSION |

110

111

115

112

141 OUTPUT PREDICTION

165 COMPARISON ← 151 — 150 SENSOR OUTPUT PROC.

130 CALIBRATION OBJECT

COMPARISON RESULT

CALIBRATION

160 CALIBRATION UPDATE → 120 CALIBRATION PARAMETER

FIG. 1

200

110

130
CALIBRATION
OBJECT

P1

DIFFERENCE OPERATION

P1-P2

P1-P3

P1-P4

P1

P2

P3

P4

211

212

213

214

210

FIG. 2A

210

210'

220

230

FIG. 2B

```
┌ ─ ─ ─ ─ ─ ─ ─ ─ ─ ─ ─ ─ ─ ─ ─ ─ ─ ─ ─ ─ ─ ─ ─ ┐
|                      S1:                        |
|         INITIALIZE CALIBRATION PARAMETER        |
| ┌ ─ ─ ─ ─ ─ ─ ─ ─ ─ ─ ─ ─ ─ ─ ─ ─ ─ ─ ─ ─ ─ ┐ |
| |     S21: INITIALIZE BASED ON COMPONENT      | |
| └ ─ ─ ─ ─ ─ ─ ─ ─ ─ ─ ─ ─ ─ ─ ─ ─ ─ ─ ─ ─ ─ ┘ |
└ ─ ─ ─ ─ ─ ─ ─ ─ ─ ─ ─ ─ ─ ─ ─ ─ ─ ─ ─ ─ ─ ─ ─ ┘
                         │
                         ▼
┌─────────────────────────────────────────────────┐
|                      S2:                         |
|             SELECT CALIBRATION OBJECT            |
| ┌ ─ ─ ─ ─ ─ ─ ─ ─ ─ ─ ─ ─ ─ ─ ─ ─ ─ ─ ─ ─ ─ ┐  |
| |          S21: ESTIMATE STATIONARITY         |  |
| └ ─ ─ ─ ─ ─ ─ ─ ─ ─ ─ ─ ─ ─ ─ ─ ─ ─ ─ ─ ─ ─ ┘  |
| ┌ ─ ─ ─ ─ ─ ─ ─ ─ ─ ─ ─ ─ ─ ─ ─ ─ ─ ─ ─ ─ ─ ┐  |
| |        S22: SELECT NONSTATIONARY OBJECT     |  |
| └ ─ ─ ─ ─ ─ ─ ─ ─ ─ ─ ─ ─ ─ ─ ─ ─ ─ ─ ─ ─ ─ ┘  |
| ┌ ─ ─ ─ ─ ─ ─ ─ ─ ─ ─ ─ ─ ─ ─ ─ ─ ─ ─ ─ ─ ─ ┐  |
| |           S23: SELECT ACTIVE SOURCE         |  |
| └ ─ ─ ─ ─ ─ ─ ─ ─ ─ ─ ─ ─ ─ ─ ─ ─ ─ ─ ─ ─ ─ ┘  |
| ┌ ─ ─ ─ ─ ─ ─ ─ ─ ─ ─ ─ ─ ─ ─ ─ ─ ─ ─ ─ ─ ─ ┐  |
| |        S24: NO SELECTION - TERMINATE        |  |
| └ ─ ─ ─ ─ ─ ─ ─ ─ ─ ─ ─ ─ ─ ─ ─ ─ ─ ─ ─ ─ ─ ┘  |
└─────────────────────────────────────────────────┘
                         │
                         ▼
┌─────────────────────────────────────────────────┐
|                      S3:                         |
|      GENERATE EXPECTED SENSOR OUTPUT SIGNAL      |
| ┌ ─ ─ ─ ─ ─ ─ ─ ─ ─ ─ ─ ─ ─ ─ ─ ─ ─ ─ ─ ─ ─ ┐  |
| | S31: PREDICT RADAR SENSOR PHASE DIFFERENCE  |  |
| └ ─ ─ ─ ─ ─ ─ ─ ─ ─ ─ ─ ─ ─ ─ ─ ─ ─ ─ ─ ─ ─ ┘  |
└─────────────────────────────────────────────────┘
                         │
                         ▼
┌─────────────────────────────────────────────────┐
|                      S4:                         |
|       RECEIVE ACTUAL SENSOR OUTPUT SIGNAL        |
| ┌ ─ ─ ─ ─ ─ ─ ─ ─ ─ ─ ─ ─ ─ ─ ─ ─ ─ ─ ─ ─ ─ ┐  |
| | S41: RECEIVE RADAR SENSOR PHASE DIFFERENCE  |  |
| └ ─ ─ ─ ─ ─ ─ ─ ─ ─ ─ ─ ─ ─ ─ ─ ─ ─ ─ ─ ─ ─ ┘  |
└─────────────────────────────────────────────────┘
                         │
                         ▼
┌─────────────────────────────────────────────────┐
|                      S5:                         |
|           UPDATE CALIBRATION PARAMETER           |
| ┌ ─ ─ ─ ─ ─ ─ ─ ─ ─ ─ ─ ─ ─ ─ ─ ─ ─ ─ ─ ─ ─ ┐  |
| |    S51: PARAMETER COMPRISES HW PARAMETERS   |  |
| └ ─ ─ ─ ─ ─ ─ ─ ─ ─ ─ ─ ─ ─ ─ ─ ─ ─ ─ ─ ─ ─ ┘  |
| ┌ ─ ─ ─ ─ ─ ─ ─ ─ ─ ─ ─ ─ ─ ─ ─ ─ ─ ─ ─ ─ ─ ┐  |
| |   S52: UPDATE CALIBRATION OBJECT PARAMETERS |  |
| └ ─ ─ ─ ─ ─ ─ ─ ─ ─ ─ ─ ─ ─ ─ ─ ─ ─ ─ ─ ─ ─ ┘  |
└─────────────────────────────────────────────────┘
```

FIG. 3

SX1:
CHARACTERIZING A VEHICLE COMPONENT BY
UPDATING CALIBRATION PARAMETER

SX11:
CHARACTERIZING A VEHICLE BUMPER

SX12:
CHARACTERIZING A VEHICLE CHASSIS

SX13:
CHARACTERIZING VEHICLE FRONT SECTION

SX14:
CHARACTERIZING VEHICLE REAR SECTION

SX2:
STORING THE UPDATED CALIBRATION PARAMETER IN
A DATABASE

FIG. 4

FIG. 5

**C - SimsResult**

Actual sensor
outputs

141

Ideal cosine
(model)

151

| | |
|---|---|
| | Rx1Ref |
| | Rx2Ref |
| | Rx3Ref |
| | Rx1Err |
| | Rx2Err |
| | Rx3Err |
| | ideal cosinus |

FIG. 6A

FOV in phase $_{deg}$

165

| | |
|---|---|
| | filtered$_{Rx1Ref}$ |
| | filtered$_{Rx1Ref}$ |
| | filtered$_{Rx3Ref}$ |
| ∗ | filtered$_{Rx1Err}$ |
| ∗ | filtered$_{Rx2Err}$ |
| ∗ | filtered$_{Rx3Err}$ |

FIG. 6B

FOV in phase $_{deg}$

- *Properties of the transmit section*

| Mode | Radiation Pattern | Properties |
|---|---|---|
| In phase: $\Sigma$ = Tx$_1$ + Tx$_2$ <br><br> Tx$_1$  Tx$_2$ | | Main beam angle = 0.0° <br> 3dB beamwidth ≈ 46.5° <br> Directivity ≈ 11.0dB |
| Out of phase: $\Delta$ = Tx$_1$ − Tx$_2$ <br><br> Tx$_1$  Tx$_2$ | | Main beam angle ≈ 34.5° <br> 3dB beamwidth ≈ 40.5° <br> Directivity ≈ 9.5dB |

**FIG. 7A**

**FIG. 7B**

**FIG. 7C**

810

Processing
circuitry

820

Sensor interface

830

Storage
medium

800

Control unit

FIG. 8

Europäisches
Patentamt

European
Patent Office

Office européen
des brevets

# EUROPEAN SEARCH REPORT

Application Number

EP 17 19 7920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/153268 A1 (JORDAN RUEDIGER [DE] ET AL) 23 June 2011 (2011-06-23) | 1,2,4,7, 10,11, 14,15 | INV. G01S13/93 G01S7/40 |
| Y | * paragraphs [0006], [0008] - [0011], [0027] - [0052]; figures 1-4 * | 3,5,6,8, 9,12,13 | G01S13/42 G01S13/44 G01S13/87 |
| A,D | US 6 778 928 B2 (BOSCH GMBH ROBERT [DE]) 17 August 2004 (2004-08-17) * the whole document * | 1,14,15 | G01S13/74 ADD. G01S13/02 |
| Y | DE 10 2014 017917 B3 (AUDI AG [DE]) 12 November 2015 (2015-11-12) * paragraphs [0007] - [0009], [0011] - [0013], [0018], [0023] - [0025], [0038] - [0053], [0055]; figures 1-9 * | 3,12,13 | G01S3/02 |
| Y | US 6 025 797 A (KAWAI NOBUHARU [JP] ET AL) 15 February 2000 (2000-02-15) * column 9, lines 27-33; figure 1 * * column 11, lines 27-41; figure 4 * * column 11, line 58 - column 12, line 10; figure 11 * | 5 | |
| Y | US 6 087 995 A (GRACE MARTIN I [US] ET AL) 11 July 2000 (2000-07-11) * column 1, line 52 - column 2, line 32 * * column 2, line 53 - column 4, line 14; figures 1-4 * | 6 | |
| Y | DE 10 2011 015935 A1 (VALEO SCHALTER & SENSOREN GMBH [DE]) 4 October 2012 (2012-10-04) * paragraphs [0016], [0057] - [0059]; figures 2-4 * | 8,9 | |

TECHNICAL FIELDS SEARCHED (IPC)

G01S

The present search report has been drawn up for all claims

| Place of search | Date of completion of the search | Examiner |
|---|---|---|
| Munich | 5 July 2018 | Schmelz, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

Application Number

EP 17 19 7920

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1, 2, 4, 7, 10, 11, 14, 15

   Adaptive radar calibration of two radar sensors with surrounding objects.
   ---

2. claims: 3, 12, 13

   Type of vehicle component (for example a certain model of car, having a certain type of bumper design on which sensors are mounted) for initialization of the calibration parameters of the radars.
   Problem solved: more reliable calibration or enhanced rate of convergence to optimal or near-optimal calibration parameters, see description, p. 15, l. 26 to p. 16, l. 8.
   ---

3. claim: 5

   Selecting a NON-stationary object as the calibration object.
   Problem solved: Being more universal in choosing proper reference objects or providing high reliability reference objects, see description, p. 17, l. 20-33.
   ---

4. claim: 6

   Adaptive radar calibration with ACTIVE radar beacons.
   Problem solved: improved calibration accuracy via higher signal-to-noise ratio, see description, p. 18, l. 1-13, Fig. 3.
   ---

5. claims: 8, 9

   Phased array radar antennas.
   Problem solved: improving angular resolution.
   ---

## ANNEX TO THE EUROPEAN SEARCH REPORT
## ON EUROPEAN PATENT APPLICATION NO.

EP 17 19 7920

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2018

| Patent document cited in search report | | Publication date | Patent family member(s) | | Publication date |
|---|---|---|---|---|---|
| US 2011153268 | A1 | 23-06-2011 | DE 102009054835 A1 | | 22-06-2011 |
| | | | EP 2339364 A2 | | 29-06-2011 |
| | | | US 2011153268 A1 | | 23-06-2011 |
| US 6778928 | B2 | 17-08-2004 | DE 19962997 A1 | | 28-06-2001 |
| | | | FR 2803031 A1 | | 29-06-2001 |
| | | | IT MI20002668 A1 | | 12-06-2002 |
| | | | JP 2001227982 A | | 24-08-2001 |
| | | | US 2002072869 A1 | | 13-06-2002 |
| DE 102014017917 | B3 | 12-11-2015 | DE 102014017917 B3 | | 12-11-2015 |
| | | | EP 3227712 A1 | | 11-10-2017 |
| | | | WO 2016087010 A1 | | 09-06-2016 |
| US 6025797 | A | 15-02-2000 | DE 19833065 A1 | | 28-01-1999 |
| | | | US 6025797 A | | 15-02-2000 |
| US 6087995 | A | 11-07-2000 | US 6087995 A | | 11-07-2000 |
| | | | US 6329952 B1 | | 11-12-2001 |
| | | | US 6335705 B1 | | 01-01-2002 |
| DE 102011015935 | A1 | 04-10-2012 | DE 102011015935 A1 | | 04-10-2012 |
| | | | WO 2012136494 A1 | | 11-10-2012 |

EPO FORM P0459

For more details about this annex : see Official Journal of the European Patent Office, No. 12/82

## REFERENCES CITED IN THE DESCRIPTION

**Patent documents cited in the description**

- US 6778928 B2